# EUROPÄISCHE PATENTSCHRIFT

(11) **EP 0 870 646 B1**
(45) Veröffentlichungstag und Bekanntmachung des Hinweises auf die Patenterteilung: **31.05.2006**
(21) Anmeldenummer: 98106135.1
(22) Anmeldetag: 03.04.1998
(51) Int. Cl.: B60Q 11/00

(54) **Elektronischer Blinkgeber**
Electronic blinker
Clignoteur électronique

(30) Priorität: 08.04.1997 US 826842
(43) Veröffentlichungstag der Anmeldung: 14.10.1998
(73) Patentinhaber: ATMEL Germany GmbH, 74072 Heilbronn (DE); Hella KGaA Hueck & Co., 59552 Lippstadt (DE)
(72) Erfinder: Fritz, Andreas, 74336 Brackenheim (DE); Evens, Hans-Josef, 59329 Wadersloh (DE); Ray, Robin Darlene, Ann Arbor, MI 48105 (US)

(56) Entgegenhaltungen:
- EP-A- 0 002 359
- EP-A- 0 044 187
- DE-A- 4 137 611
- US-A- 5 057 814
- US-A- 5 583 731

## Beschreibung

Die Erfindung betrifft ein Verfahren zur Überwachung eines aus mehreren parallel geschalteten Lastelementen, im intermittierenden Betrieb geführten Laststromkreises nach dem Patentanspruch 1 und eine elektronische Schaltung zur Durchführung dieses Verfahrens nach den Patentansprüchen 6 und 8.

Ein solcher, als elektronischer Blinkgeber ausgebildeter Laststromkreis ist aus der deutschen Patentschrift DE 41 13 455 C2 und der korrespondierenden US-Patentschrift 5,309,142 bekannt. Derartige elektronische Blinkgeber nach dem Stand der Technik weisen wenigstens drei Klemmen zur Ansteuerung von zwei, drei oder vier Blinklampen pro Blinkrichtung auf (Blinklampen vorne bzw. hinten, eventuell seitliche Blinklampe und blinkende Anzeigelampe im Armaturenbrett). Der Ausfall einer oder mehrerer Hauptlampen, also den vorne oder hinten angeordneten Blinklampen, muß laut Gesetz erkannt und dem Fahrer entweder optisch oder akustisch angezeigt werden. Im Normalfall wird bei einem Blinklampenausfall die Blinkfrequenz erhöht, beispielsweise verdoppelt, so daß der Fahrer sowohl akustisch durch die erhöhte Schaltfrequenz des Blinkrelais als auch optisch durch die erhöhte Blinkfrequenz der Anzeigelampe im Armaturenbrett auf einen Blinklampenausfall hingewiesen wird.

Bekannte elektronische Blinkgeber weisen hierfür in nachteiliger Weise eine Mehrzahl von Meßwiderstände (Shunts) auf, um anhand des jeweils daran hervorgerufenen Spannungsabfalls den Ausfall einer oder mehrerer Blinklampen zu erkennen. Da die in Europa verwendeten Blinklampen ausschließlich eine Leistung von 21 Watt aufweisen, genügt eine Ausführungsform eines Blinkgebers mit einem bestimmten Meßwiderstand. In den USA hingegen werden beispielsweise Hauptlampen mit 21 W, 27 W oder noch höherer Leistung verwendet. Hinzu kommen Modellvarianten, bei denen hinten oder vorne und hinten jeweils zwei Hauptlampen eingesetzt sind. Daraus ergeben sich eine Vielzahl von Schaltungsvarianten, die verschiedene, der jeweiligen Lampenleistung angepaßte Meßwiderstände aufweisen müssen.

Die US 4,528,678 offenbart eine Vorrichtung zum Einsatz mit programmierbaren automatischen Mehrkanal-Steuereinheiten, die dazu ausgebildet ist, einen elektrischen Fehlerzustand eines jeweiligen Kanals anzuzeigen. Die Vorrichtung weist eine Mehrzahl von Kanälen mit jeweils einem Signalgenerator (Sensor) und einem elektrischen Widerstandsmittel (Shunt) auf und offenbart für jeden Kanal das Vorsehen einer Vergleichereinheit mit zwei Komparatoren, um in Wechselwirkung mit dem Widerstandsmittel durch einen Vergleich der Kanalspannung mit zwei Schwellwert-Spannungen einen normalen Betriebszustand des Kanals einerseits in "An" und "Aus" zu unterscheiden sowie andererseits einen normalen Betriebszustand von einem Lastausfall (offener Kreis) abzugrenzen. Um darüber hinaus noch zwischen Lastausfall und Kurzschluss unterscheiden zu können, lehrt die US 4,528,678 das Vorsehen einer weiteren Vorrichtung, wobei für jeden Kanal ein Komparator auf einen Schwellwert eingestellt ist, der höher liegt als der Schwellwert für den normalen Betriebszustand in der ersten Vorrichtung. Dabei ist insbesondere der große schaltungstechnische Aufwand der somit realisierten elektronischen Schaltung als nachteilig anzusehen.

Der Erfindung liegt die Aufgabe zugrunde, ein neuartiges Verfahren bzw. eine insbesondere zum Durchführen dieses Verfahrens geeignete elektronische Schaltung anzugeben, das bzw. die es ermöglicht, einen elektronischen Blinkgeber in einfacherer und kostengünstigerer Weise auszubilden.

Diese Aufgabe wird gelöst durch ein Verfahren zur Überwachung eines aus mehreren parallel geschalteten Lastelementen gebildeten, im intermittierenden Betrieb geführten Laststromkreis, bei dem der gesamte Laststrom über einen Meßwiderstand geführt und bei dem der an diesem Meßwiderstand auftretende Spannungswert gemessen und ausgewertet wird, mit folgenden Verfahrensschritten:
a) als Last- oder Lampenausfallkontrollschwelle wird eine erste Spannungsschwelle festgelegt,
b) als Kurzschlußkontrollschwelle wird eine zweite Spannungsschwelle festgelegt, die größer ist als die erste Spannungsschwelle, und
c) der während des Betriebes erzeugte Spannungswert wird mit der Lastausfallkontrollschwelle und der Kurzschlußkontrollschwelle verglichen und in Abhängigkeit des Vergleichsergebnisses ein Lastausfall oder ein Kurzschluß detektiert, oder eine höhere als die erste Spannungsschwelle wird als lampenausfallkontrollschwelle festgelegt, falls die Kurzschlußkontrollschwelle noch nicht überschritten ist.

Zur Durchführung dieses Verfahrens ist ein erste ektronische Schaltung vorgesehen, mit
a) einem Meßwiderstand (Shunt),
b) wenigstens einem steuerbaren Schaltelement zur Steuerung des Laststromkreises,
c) mehreren parallel geschalteten Lastelementen, insbesondere Blinklampen, und
d) einem integriertes Schaltkreis mit
erste wenigstens zwei Komparatoren zur Bildung der Spannungsschwellen,
erste einer internen Steuereinheit zum Festlegen der Spannungsschwellen und zur Steuerung des Schaltelements und
erste einer Speichereinheit zur Speicherung der ersten Spannungsschwelle.

Darüber hinaus ist zur Durchführung des erfindungsgemäßen Verfahrens alternativ eine zweite elektronische Schaltung vorgesehen, mit
a) einem Messwiderstand,
b) wenigstens einem steuerbaren Schaltelement zur Steuerung des Laststromkreises,
c) mehreren parallel geschalteten Lastelementen, insbesondere Blinklampen, und
d) einem integrierten Schaltkreis mit
   - einem Analog-Digital-Umsetzer zur Bildung der ersten und zweiten Spannungsschwellen,
   - einer internen Steuereinheit zum Festlegen der ersten und zweiten Spannungsschwellen und zur Steuerung des Schaltelements und
   - einer Speichereinheit zur Speicherung der ersten Spannungsschwelle.

Die Vorteile der Erfindung liegen darin, daß der Blinkgeber selbständig die jeweilige Blinklampenanordnung erkennt und dadurch universell für alle Konfigurationen verwendet werden kann. Weiterhin kann auch beispielsweise zusätzlich ein Anhänger an ein Fahrzeug angeschlossen werden, ohne daß der Blinkgeber ausgetauscht werden muß.

Vorteilhafte Weiterbildungen der Erfindung sind in den Unteransprüchen beschrieben.

So ist es nach Anspruch 2 besonders vorteilhaft, den beiden Spannungsschwellen weitere Spannungsschwellen hinzuzufügen, so daß bei einem durch Anhängerbetrieb oder stärkere Lampen hervorgerufenen höheren Laststrom die Lastausfallkontrollschwelle auf eine höhere Spannungsschwelle festgelegt werden kann.

Ein Ausführungsbeispiel der Erfindung ist nachstehend ausführlich erläutert und anhand der Figuren dargestellt.

Es zeigen
- Fig. 1:: ein erstes Prinzipschaltbild eines Blinkgebers mit einem integrierten Schaltkreis,
- Fig. 2:: ein zweites Prinzipschaltbild eines Blinkgebers (Zwei-Kreis-Blinksystem) mit dem integrierten Schaltkreis aus Fig. 1,
- Fig. 3a:: ein Detailschaltbild mit dem internen Aufbau des integrierten Schaltkreises der Blinkgeber aus Fig. 1 und 2,
- Fig. 3b:: ein Detailschaltbild ähnlich dem der Fig. 3a, das aber anstatt mehrerer Komparatoren einen AD-Umsetzer aufweist,
- Fig. 4a-d:: Zeitdiagramme von Signalverläufen an verschiedenen Pins des Integrierten Schaltkreises aus den Fig. 3a, b in der Betriebsart "Richtungsblinken",
- Fig. 5a-e:: Zeitdiagramme von Signalverläufen an verschiedenen Pins des Integrierten Schaltkreises aus den Fig. 3a, b in der Betriebsart "Warnblinken",
- Fig. 6a-c:: Zeitdiagramme von Signalverläufen am Relaistreiberausgang des integrierten Schaltkreises aus den Fig. 3a, b in der Betriebsarten "Richtungsblinken", "Warnblinken", "Lampenausfall" und "Kurzschluß",
- Fig. 7a-b:: detaillierte Zeitdiagramme der Signalverläufe aus den Fig. 6a und 6b und
- Fig. 8:: ein Flußdiagramm, das den Zusammenhang zwischen Meßvorgängen und der Verzweigung in verschiedene Betriebsarten darstellt.

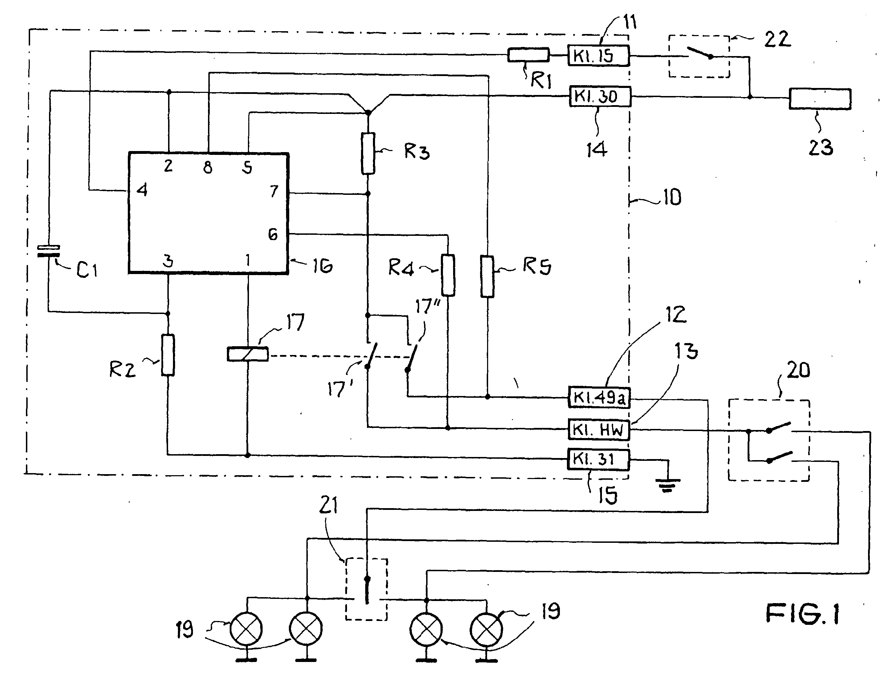

Gemäß der in **Fig. 1** dargestellten, ersten Version eines Prinzipschaltbildes weist ein elektronischer Blinkgeber **10** drei Steuereingänge auf: Zündung **11** (Klemme 15), Richtungsblinkschalter **12** (Klemme 49a) und Warnblinkschalter **13** (Klemme HW); als weitere Klemmen neben diesen drei Steuereingängen sind noch der Batterieanschluß **14** (Klemme 30) und der Bezugspotentialanschluß **15** (Klemme 31) vorgesehen. Ein integrierter Schaltkreis **16** des elektronischen Blinkgebers **10** besitzt acht externe Anschlußpins **1** bis **8,** das heißt, er kann in einem achtpoligen DIP-Gehäuse oder SO8-Gehäuse realisiert werden.

Als Anschlußpins des integrierten Schaltkreises **16** sind beispielsweise der sogenannte Relaistreiberausgang **1** (an den statt einem Relais auch beispielsweise die Basis eines Power-MOSFETs angeschlossen sein kann), ein Anschluß **2** für die Batteriespannung V_{batt}, ein Anschluß **3** für das Bezugspotential des integrierten Schaltkreises **16,** ein Eingang **4** für die Klemme 15 (Zündungseingang), ein Warnblinkeingang **6,** ein Meßeingang **7,** ein Eingang **5,** der mit der Batteriespannung verbunden ist und das Bezugspotential für den Meßeingang 7 darstellt und ein Richtungsblinkeingang **8** vorgesehen.

Zwischen den Anschlüssen **2** und **3** ist ein Kondensator **C**_{**1**} angeordnet, der bei negativen Störspannungen als Stützkapazität wirkt. Ohmsche Widerstände **R**_{**1**}**, R**_{**2**}**, R**_{**4**} bzw. **R**_{**5**} sind zum Schutz des integrierten Schaltkreises **16** gegen Störimpulse und verpolung in den Zuleitungen zu den Anschlüssen **4, 3, 6** bzw. **8** angeordnet. Ein niederohmiger Widerstand **R**_{**3**} (mit z. B. 20 mΩ) wird als Meßwiderstand (Shunt) verwendet.

An den Anschluß **1** des integrierten Schaltkreises **16** ist als Schaltelement ein Blinkrelais **17** angeschlossen, dessen zwei Relaiskontakte **17'** und **17"** als Last Blinklampen **19** über einen Warnblinkschalter **20** oder über einen Richtungsblinkschalter **21** aktivieren. Zusätzlich sind in der Fig. 1 noch der an Klemme 15 angeschlossene Zündschalter **22** und die Fahrzeugbatterie **23** des Fahrzeugs dargestellt, wobei die genaue Beschaltung des Warnblinkschalters **20,** der die Blinklampen **19** auch bei ausgeschaltetem Zündschalter **22** aktivieren können muß, einem Fachmann bekannt und deshalb nicht dargestellt ist.

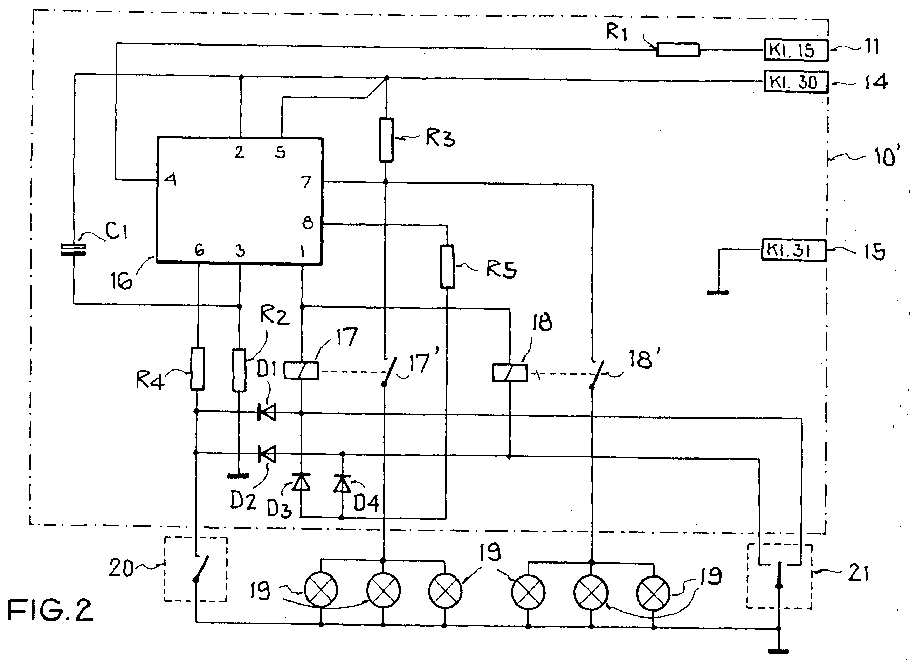

In der **Fig. 2** ist eine zweite Version eines Prinzipschaltbildes eines elektronischen Blinkgebers **10'** dargestellt, ein sogenanntes Zwei-Kreis-Blinksystem. Es weist gegenüber der in Fig. 1 dargestellten ersten Version den Vorteil auf, daß der hohe Lampenstrom nicht durch die schalter **20** und **21** fließt und deshalb diese Schalter einfacher und kostengünstiger ausgelegt werden können.

Das Prinzipschaltbild der Fig. 2 weist mehrheitlich die gleichen Komponenten wie das Prinzipschaltbild der Fig. 1 auf; für gleiche Komponenten werden auch gleiche Bezugszeichen verwendet und auf eine nochmalige Beschreibung soll verzichtet werden. Jedoch werden (im Unterschied zum Prinzipschaltbild der Fig. 1) im Prinzipschaltbild der Fig. 2 zwei parallel geschaltete und mit dem Anschlußpin **1** des integrierten Schaltkreises **16** verbundene Blinkrelais **17** bzw. **18** mit jeweils nur einem Relaiskontakt **17'** bzw. **18'** als Schaltelement verwendet. Zwischen Scwaltungspunkten angeordnete Dioden **D**_{**1**} bis **D**_{**4**} dienen zum Entkoppeln der verschiedenen Strompfade beim Richtungs- oder Warnblinken.

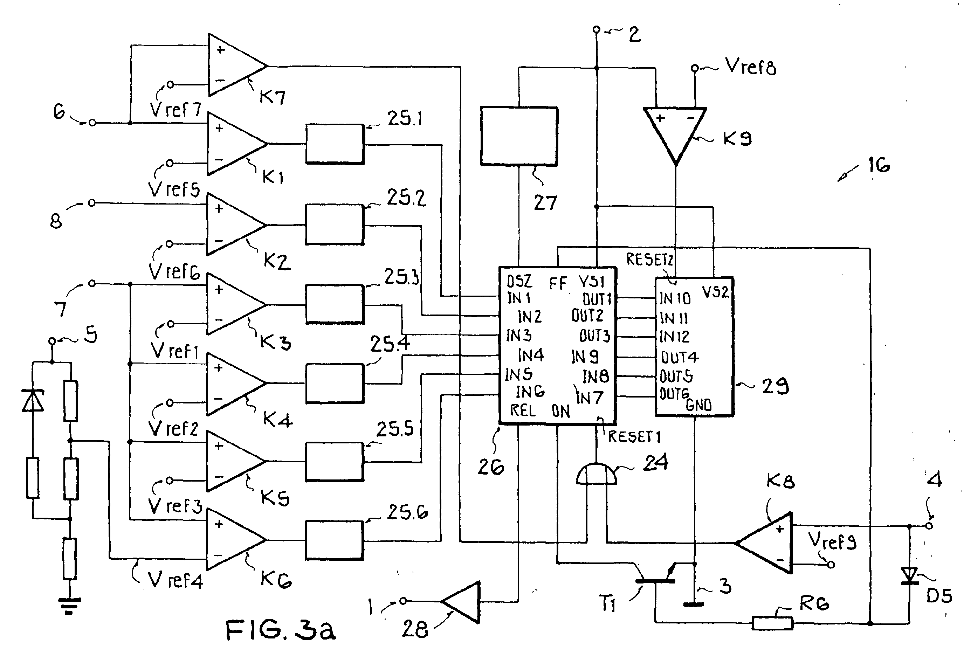

Obwohl die Blinkgeber **10** und **10'** der Figuren 1 und 2 eine unterschiedliche innere Beschaltung aufweisen, können beide Konfigurationen mit dem gleichen integrierten Schaltkreis **16** bestückt werden, dessen interner Aufbau im Detailschaltbild der **Fig. 3a** dargestellt ist und nachstehend erläutert wird.

Ein dem Anschlußpin **6,** der wie in Fig. 1 und 2 den Warnblinkeingang des integrierten Schaltkreises **16** darstellt, zugeführtes Signal wird jeweils dem nichtinvertierenden Eingang zweier Komparatoren **K**_{**1**} bzw. **K**_{**7**} zugeführt und mit jeweils einer am jeweiligen invertierenden Eingang anliegenden Referenzspannung **V**_{**ref5**} bzw. **V**_{**ref7**} verglichen. Übersteigt die am Anschlußpin **6** anliegende Spannung die Referenzspannung **V**_{**ref7**}**,** so wird vom Komparator **K**_{**7**} dem einen Eingang eines OR-Gates **24** ein Signal zugeführt; übersteigt sie die Referenzspannung **V**_{**ref5**}**,** so wird das Ausgangssignal des Komparators **K**_{**1**} zuerst einer Entprellschaltung **25.1** und anschließend einem Eingang **IN**_{**1**} einer internen Steuereinheit 26 zugeführt.

Ein dem Anschlußpin **8,** der wie in Fig. 1 und 2 den Richtungsblinkeingang des integrierten Schaltkreises **16** darstellt, zugeführtes Signal wird dem nichtinvertierenden Eingang eines Komparators **K**_{**2**} zugeführt und mit einer am invertierenden Eingang anliegenden Referenzspannung **V**_{**ref6**} verglichen. Übersteigt die am Anschlußpin **8** anliegende Spannung die Referenzspannung V_{ref6}, so wird vom Komparator **K**_{**2**} ein Signal zuerst einer Entprellschaltung **25.2** und anschließend einem Eingang **IN**_{**2**} der internen Steuereinheit **26** zugeführt.

Ein am Anschlußpin **7,** der wie in Fig. 1 und 2 den Meßeingang des integrierten Schaltkreises **16** darstellt, anliegendes Signal wird jeweils dem nichtinvertierenden Eingang von vier Komparatoren **K**_{**3**}**, K**_{**4**}**, K**_{**5**} bzw. **K**_{**6**} zugeführt und mit jeweils einer am jeweiligen invertierenden Eingang anliegenden Referenzspannung **V**_{**ref1**}**, V**_{**ref2**}**, V**_{**ref3**} bzw. **V**_{**ref4**} verglichen. Übersteigt die am Anschlußpin **7** anliegende Spannung die jeweilige Referenzspannung **V**_{**ref1**}**, V**_{**ref2**}**, V**_{**ref3**} bzw. **V**_{**ref4**}**,** so wird vom jeweiligen Komparator **K**_{**3**}**, K**_{**4**}**, K**_{**5**} bzw. **K**_{**6**} ein Signal zuerst einer jeweiligen Entprellschaltung **25.3, 25.4, 25.5** bzw. **25.6** und anschließend einem Eingang **IN**_{**3**}**, IN**_{**4**}**, IN**_{**5**} bzw. **IN**_{**6**} der internen Steuereinheit **26** zugeführt.

Die Komparatoren **K**_{**3**}**, K**_{**4**}**, K**_{**5**} und **K**_{**6**} vergleichen also, wie beschrieben, die am Shunt **R**_{**3**} gemessenen spannungswerte mit den Referenzspannungen **V**_{**ref1**}**, V**_{**ref2**}**, V**_{**ref3**} und **V**_{**ref4**}**,** die wie die Referenzspannungen **V**_{**ref5**}**, V**_{**ref6**}**, V**_{**ref7**}**, V**_{**ref8**} und **V**_{**ref9**} auf bekannte Art und Weise erzeugt werden, beispielsweise durch jeweilige Abgriffe in einer zwischen Anschlußpin **5** und dem Bezugspotential angeordneten Spannungsteilerschaltung. In der Fig. 3a ist eine mögliche Spannungsteilerschaltung dargestellt, mit der die Referenzspannung V_{ref4} erzeugt wird. Alle weiteren Referenzspannungen können mit einer entsprechenden Schaltung erzeugt werden, wobei die Widerstandswerte und die Anordnung der einzelnen Widerstände dem gewünschten Spannungswert entsprechend gewählt werden müssen.

Die Referenzspannungen **V**_{**ref1**}**, V**_{**ref2**}**, V**_{**ref3**} **und V**_{**ref4**} müssen den jeweils am Shunt **R**_{**3**} gemessenen Spannungswerten entsprechen, der bei einer beabsichtigten Applikationsschaltung typischerweise im Normalbetrieb (Richtungs- und warnblinken), im Anhängerbetrieb und bei Lampenausfall erwartet werden. Tabelle 1 zeigt beispielhafte Referenzspannungswerte bei einer typischen Bordspannung von jeweils 9 Volt, 12 Volt und 15 Volt.

**Tabelle 1: Referenzspannungen bei verschiedenen Bordspannungen**

| | **Bordspannung** | | |
|---|---|---|---|
| | **9 Volt** | **12 Volt** | **15 Volt** |
| **V**_{ref1} | 51 mV | 57 mV | 63 mV |
| **V**_{ref2} | 84 mV | 94,5 mV | 105 mV |
| **V**_{ref3} | 114 mV | 130 mV | 145 mV |
| **V**_{ref4} | 400 mV | 475 mV | 550 mV |

Wenn beispielsweise bei einer Bordspannung von 12 Volt auf jeder Fahrzeugseite drei Blinklampen mit jeweils 21 Watt beim Richtungsblinken eingeschaltet werden, so fließt über den Shunt **R**_{**3**} rein rechnerisch ein Strom von 5,25 Ampere (wobei der geringe elektrische Widerstand des Shunts **R**_{**3**} von 20 mΩ vernachlässigt wurde), was am shunt **R**_{**3**} einen Spannungsabfall von 105 mV hervorruft. Dieser gemessene Spannungswert liegt zwischen den Werten für die Referenzspannungen **V**_{**ref2**} (94,5 mV) und **V**_{**ref3**} (130 mV) der Tabelle 1, so daß die Schwelle **V**_{**ref2**} als "Lampenausfallkontrollschwelle" (oder "Lastausfallkontrollschwelle") definiert wird, und die Schwelle **V**_{**ref3**} verwendet wird, um die zusätzlich angeschlossenen Blinklampen beispielsweise eines Anhängers zu erkennen, wie weiter unten beschrieben wird.

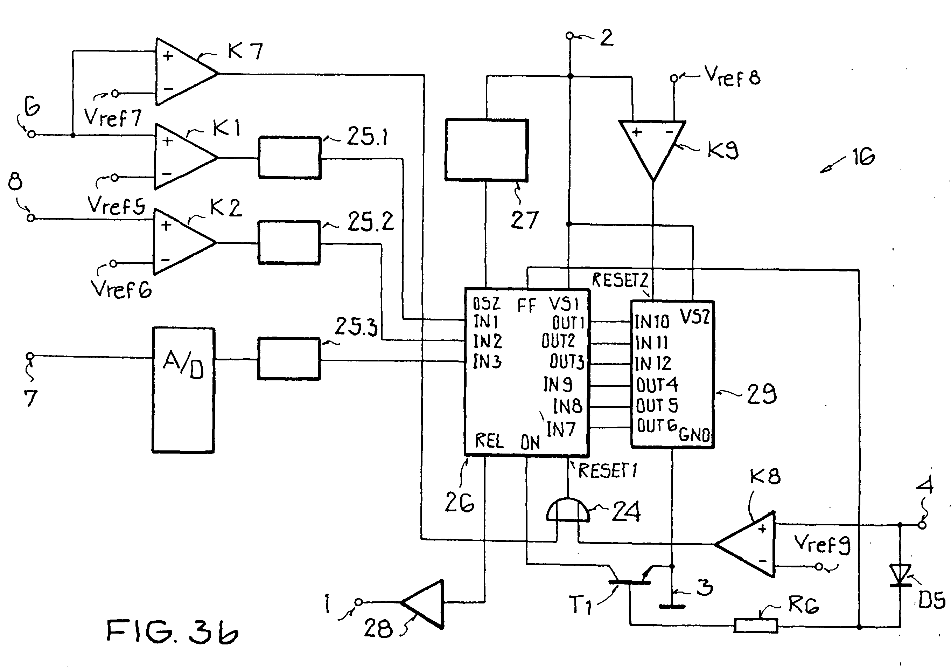

Anstelle der in diesem Ausführungsbeispiel verwendeten Komparatoren **K**_{**3**}**, K**_{**4**}**, K**_{**5**} und **K**_{**6**} kann zum Vergleich der am Shunt **R**_{**3**} gemessenen Spannungen mit den Referenzspannungen auch ein Analog-Digital-Umsetzer verwendet werden. Einem Fachmann ist es ohne weiteres möglich, die Komparatoren durch einen AD-Umsetzer zu ersetzen, wie dies in **Fig. 3b** dargestellt ist. Durch Verwendung eines AD-Umsetzers, dessen Eingang mit dem Anschlußpin 7 verbunden ist, können sehr fein abgestufte und veränderbare Spannungsschwellen zum Erkennen eines Lampenausfalls realisiert werden.

Die interne Steuereinheit **26** weist außer den bereits beschriebenen noch folgende Anschlüsse auf:
- Einen Eingang **OSZ,** dem das Ausgangssignal eines mit beispielsweise 100 kHz schwingenden, internen Oszillators **27** zugeführt wird (anstelle des internen Oszillators **27** kann auch ein externer Oszillator mit dem Eingang **OSZ** verbunden werden); der Eingang des Oszillators **27** ist mit dem Anschlußpin **2** (Batteriespannung **V**_{**batt**}**)** verbunden,
- einen Relaistreiberausgang **REL,** der über einen internen Verstärker **28** mit dem Anschlußpin **1** des integrierten Schaltkreises **16** verbunden ist,
- einen Eingang **RESET1,** der mit dem Ausgang des OR-Gates **24** verbunden ist,
- einen Eingang **ON,** über den die interne Steuereinheit **26** eingeschaltet wird und der mit dem Kollektor eines internen Transistors **T**_{**1**} verbunden ist,
- einen Eingang **VS1,** der mit dem Anschlußpin **2** (Batteriespannung **V**_{**batt**}**)** verbunden ist,
- einen Anschluß **FF,** der über einen Widerstand **R**_{**6**} mit der Basis des Transistors T₁ verbunden ist,
- drei Ausgänge **OUT1, OUT2** bzw. **OUT3,** die jeweils mit Eingängen **IN10, IN11** bzw. **IN12** einer internen Speichereinheit **29** verbunden sind und
- drei Eingänge **IN7, IN8** bzw. **IN9,** die jeweils mit Ausgängen **OUT6, OUT5** bzw. **OUT4** der internen Speichereinheit **29** verbunden sind.

Die interne Speichereinheit **29** weist neben den bereits genannten Anschlüssen noch einen Anschluß **GND** auf, der mit dem Bezugspotential verbunden ist, einen Anschluß **RESET2,** um die Speichereinheit **29** zurückzusetzen und einen Anschluß **VS2** zum Anschluß an die Batteriespannung **V**_{**batt**} (Anschlußpin **2** des Integrierten Schaltkreises **16).**

Das Prinzipschaltbild des Integrierten Schaltkreises **16** der Fig. 3a weist im weiteren noch einen Komparator **K**_{**8**} auf, dessen nichtinvertierender Eingang mit dem Anschlußpin **4** (Zündung) des integrierten Schaltkreises **16** verbunden ist; seinem invertierenden Eingang wird eine Referenzspannung **V**_{**ref9**}**,** und sein Ausgangssignal dem zweiten Eingang des OR-Gates **24** zugeführt. Mit dem Anschlußpin **4** ist auch die Anode einer Diode **D**_{**5**} verbunden, deren Kathode über den Widerstand **R**_{**6**} zur Basis des Transistors **T**_{**1**} führt.

Der nichtinvertierende Eingang eines weiteren Komparators **K**_{**9**} ist mit dem Anschlußpin **2** (Batterie) verbunden; seinem invertierenden Eingang wird eine Referenzspannung **V**_{**ref8**} zugeführt, und sein Ausgang ist mit dem Eingang RESET2 der Speichereinheit 29 verbunden.

Die interne Speichereinheit **29** ist programmierbar und weist einen Permanentspeicher auf zum Abspeichern von Spannungsmeßwerten, anhand derer ein Lampenausfall detektiert werden kann. Damit gespeicherte Werte nicht verloren gehen, ist die Speichereinheit **29** ständig mit der Batterie des Fahrzeugs verbunden. Ein Zurücksetzen (Reset) dieses Permanentspeichers erfolgt über den Eingang **RESET2** erst dann, wenn die Verbindung zur Batteriespannung **V**_{**batt**} getrennt und danach wiederhergestellt wird (power on reset, POR).

Nach jedem POR und vor der ersten Inbetriebnahme des elektronischen Blinkgebers **10** bzw. **10',** der in den Betriebsarten "Richtungsblinken", "Lampenausfall", "Anhängerbetrieb", "Kurzschluß" und "Warnblinken" betrieben werden kann, muß dieser erst programmiert (initialisiert) werden, was im folgenden beschrieben wird.

### Programmierung der Speichereinheit 29

Die interne Speichereinheit **29** enthält drei interne bistabile Kippstufen (Flip-Flops), an deren jeweiligem Ausgang bei Vorzugslage ein Low-Pegel anliegt. Bei jedem POR kehren diese drei Flip-Flops in diese Vorzugslage zurück, wodurch der Speicher gelöscht wird. Die nach einem POR vorzunehmende (Neu-) Programmierung (initialisierung) der Speichereinheit **29** erfolgt nur beim Richtungsblinken (Blinken nach links oder rechts), und zwar beispielsweise während der dritten Hellphase oder Hellzeit (Blinklampen sind hell). Eine erfolgreiche Programmierung wird durch Setzen eines Programmier-Flags angezeigt.

Es gibt drei Situationen, bei denen keine Initialisierung vorgenommen und kein Programmier-Flag gesetzt wird:
1. Bei nur kurzzeitigem Richtungsblinken nach rechts oder links, wenn nur eine oder zwei Hellphasen auftreten,
2. beim Warnblinken und
3. wenn ein Kurzschluß erkannt wird, wodurch ein sehr hoher Lampenstrom durch dem Meßwiderstand **R**_{**3**} (Fig. 1, 2) fließt.

Erfolgt eine Initialisierung während der dritten Hellphase beim ordnungsgemäßen Richtungsblinken nach links oder rechts, so erfolgen folgende Aktivitäten:
- Nach der dritten Hellphase wird ein bis zum nächsten POR (hervorgerufen durch Ab- und anschließendem Einschalten der Batteriespannung) ständig aktiviertes Programmier-Flag gesetzt,
- ein interner Zähler bestimmt den am Meßwiderstand **R**_{**3**} anstehenden Spannungswert (bei diesem Ausführungsbeispiel wird nach 130 ms für 5 ms gemessen),
- abhängig von der gemessenen Spannung am Meßwiderstand **R**_{**3**} wird eine der internen Schwellen **V**_{**ref1**}**, V**_{**ref2**} oder **V**_{**ref3**} am jeweiligen Komparator **K**_{**3**}**, K**_{**4**} oder **K**_{**5**} als Lastausfallkontrollschwelle definiert und
- die Lastausfallkontrollschwelle wird im ständig aktivierten Speicher der Speichereinheit **29** abgelegt. Beispielsweise wird einer der Eingänge **IN**_{**3**}**, IN**_{**4**} oder **IN**_{**5**}**,** der internen Steuereinheit **26,** die jeweils Ausgangssignale der Komparatoren **K**_{**3**}**, K**_{**4**} oder **K**_{**5**} erhalten, als Indikator eines Fehlerzustands (wenn also ein zu hoher Strom durch den Shunt **R**_{**3**} fließt) bestimmt.

Das bedeutet, daß durch den Spannungsabfall am Shunt R₃ vier mögliche Zustände (mit Ausnahme des Kurzschlußfalls) auftreten können:
- keine schwelle ist überschritten,
- nur die Schwelle **V**_{**ref1**} ist überschritten,
- die Schwellen **V**_{**ref1**} und **V**_{**ref2**} sind überschritten und
- alle Schwellen **V**_{**ref1**}**, V**_{**ref2**} und **V**_{**ref3**} sind überschritten.

Für jeden dieser Spannungszustände zeigt Tabelle 2 den resultierenden High- oder Low-Pegel, der am Ausgang der Komparatoren **K**_{**3**}**, K**_{**4**} und **K**_{**5**} **,**den Ein- und Ausgängen **IN**_{**3**}**, IN**_{**4**}**, IN**_{**5**}**, OUT**_{**1**} und **OUT**_{**2**} der internen Steuereinheit 26 und den Eingängen **IN**_{**10**} und **IN**_{**11**} der Speichereinheit **29** ansteht.

**Tabelle 2: Signalpegel bei verschiedenen Spannungszuständen**

| überschrittene Schwelle(n) | **K**_{**3**} | **K**_{**4**} | **K**_{**5**} | **IN**_{**3**} | **IN**_{**4**} | **IN**_{**5**} | **OUT**_{**1**} | **OUT**_{**2**} | **IN**_{**10**} | **IN**_{**11**} |
|---|---|---|---|---|---|---|---|---|---|---|
| keine | 0 | 0 | 0 | 0 | 0 | 0 | 0 | 0 | 0 | 0 |
| **V**_{**ref1**} | 1 | 0 | 0 | 1 | 0 | 0 | 0 | 1 | 0 | 1 |
| **V**_{**ref2**} | 1 | 1 | 0 | 1 | 1 | 0 | 1 | 0 | 1 | 0 |
| **V**_{**ref3**} | 1 | 1 | 1 | 1 | 1 | 1 | 1 | 1 | 1 | 1 |

Jeder dieser vier möglichen Spannungszustände wird mit Hilfe von zwei der Kippschaltungen (Flip-Flops) der Speichereinheit **29** gespeichert, während eine dritte Kippschaltung den Zustand (gesetzt oder nicht gesetzt) des Programmier-Flags am Ausgang **OUT**_{**3**} der internen Steuereinheit **26** und am Eingang **IN**_{**12**} der Speichereinheit **29** speichert. Der Zustand der Kippschaltung des (gesetzten oder nicht gesetzten) Programmier-Flags kann anschließend über den Ausgang **OUT**_{**6**} der Speichereinheit **29** und der Zustand der beiden für den gespeicherten Spannungszustand zuständigen Kippschaltungen über die Ausgänge **OUT**_{**4**} und **OUT**_{**5**} der Speichereinheit **29** ausgelesen werden (bei eingeschalteter Zündung).

Nach diesen Aktivitäten ist die Speichereinheit **29** vollständig programmiert. Eine neuerliche Programmierung muß erst wieder nach einem POR (hervorgerufen durch Ab- und anschließendem Einschalten der Batteriespannung) vorgenommen werden.

werden mehr als die in diesem Ausführungsbeispiel verwendeten drei internen Schwellen V_{ref1}, V_{ref2} und V_{ref3} benötigt, so sind der Anzahl der gewünschten Schwellen entsprechend viele Komparatoren einzusetzen, und die Speichereinheit **29** muß zusätzliche Kippschaltungen enthalten.

Wird anstelle der in diesem Ausführungsbeispiel verwendeten Komparatoren **K**_{**3**}**, K**_{**4**}**, K**_{**5**} und **K**_{**6**} ein Analog-Digital-Umsetzer am Signaleingang **7** verwendet (wie in Fig. 3b dargestellt), so kann eine sehr fein abgestufte, einstellbare Spannungsschwelle zur Detektierung eines Lampenausfalls realisiert werden.

### Betriebsart "Richtungsblinken"

Die Betriebsart "Richtungsblinken" ist nur bei eingeschalteter Zündung möglich, wenn also der Zündschalter **22** (Fig. 1) geschlossen ist. Wenn der Zündschalter **22** eingeschaltet wird, werden von der internen Steuereinheit **26** die in der Speichereinheit **29** abgelegten Werte und Zustände abgefragt. Bei gesetztem Programmier-Flag, d. h. wenn am Ausgang OUT₆ High-Pegel anliegt, wird anhand der an den Ausgängen **OUT**_{**4**} und **OUT**_{**5**} anstehenden Pegel festgelegt, welcher Ausgang der Komparatoren **K**_{**3**}**, K**_{**4**} oder **K**_{**5**} als Lampenausfallkontrollschwelle definiert wird. Daraufhin werden, bei eingeschaltetem Richtungsblinkschalter **21** (Fig. 1, 2), die gewünschten rechts- oder linksseitigen Blinklampen **19** mit der vorgegebenen Blinkfrequenz ein- und ausgeschaltet. Bei jedem Richtungsblinken nach links oder rechts wird während jeder Hellphase (Blinklampen **19** sind eingeschaltet) der am Meßwiderstand **R**_{**3**} anliegende Spannungswert gemessen und mit der in der Speichereinheit **29** abgespeicherten und als Lastausfallkontrollschwelle definierten Spannungsschwelle verglichen.

Liegt der gemessene Spannungswert beispielsweise über der gerade eingestellten Schwelle und hat er die nächst höhere Schwelle noch nicht überschritten (also beispielsweise über der Schwelle V_{ref1} und die Schwelle V_{ref2} noch nicht überschritten, für den Fall, daß die Schwelle **V**_{**ref1**} des Komparators **K**_{**3**} als Lampenausfallkontrollschwelle definiert ist), so bedeutet dies, daß alle rechts- bzw. linksseitigen Blinklampen **19** ordnungsgemäß arbeiten. Die Blinkfrequenz in dieser Betriebsart "Richtungsblinken" beträgt dann beispielsweise 1,5 Hz. Liegt die am Shunt **R**_{**3**} gemessene Spannung jedoch niedriger als die momentan gespeicherte Lampenausfallkontrollschwelle, wird in die Betriebsart "Lampenausfall" gewechselt. Übersteigt die gemessene Spannung eine Schwelle, die höher ist als die momentan eingestellte Lampenausfallkontrollschwelle, wird die Betriebsart "Anhängerbetrieb" aufgenommen, wie weiter unten beschrieben wird.

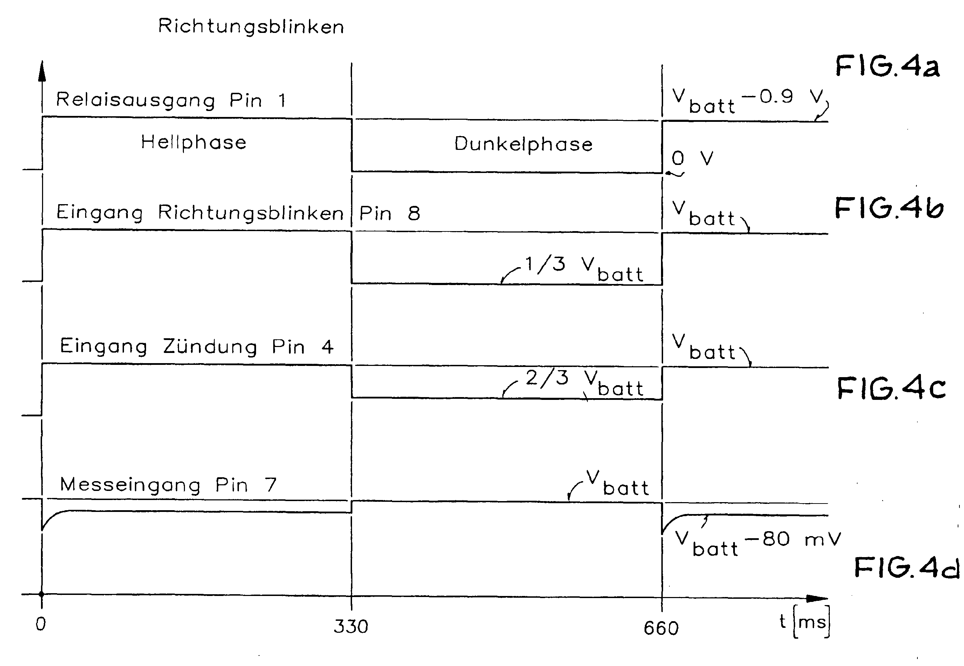

Die **Fig. 4a-d** zeigen für die Betriebsart "Richtungsblinken" beispielhafte Zeitdiagramme von Signalverläufen an verschiedenen Anschlußpins des integrierten Schaltkreises **16:** Relaistreiberausgang **1** (Fig. 4a), Richtungsblinkeingang **8** (Fig. 4b), Eingang **4** für die Zündung (Fig. 4c) und Meßeingang **7** (Fig. 4d). Jedes Signal zeigt High- und Low-Pegel, und die Zeitachse zeigt den standardmäßigen Fall in Form von sich mit einer Frequenz von 1,5 Hz abwechselnden Hell- und Dunkelphasen.

### Betriebsart "Lampenausfall"

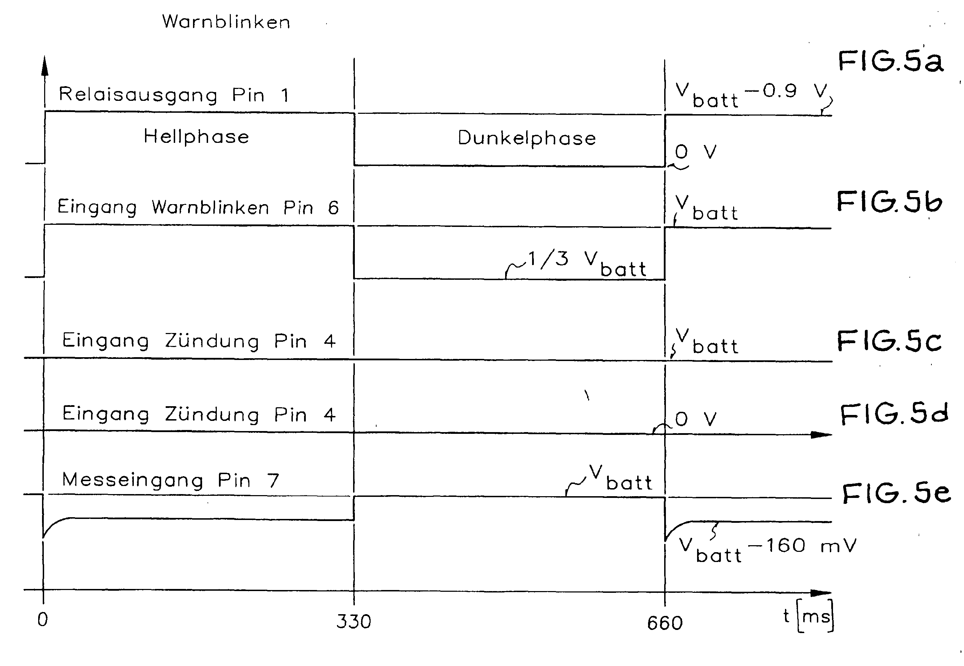

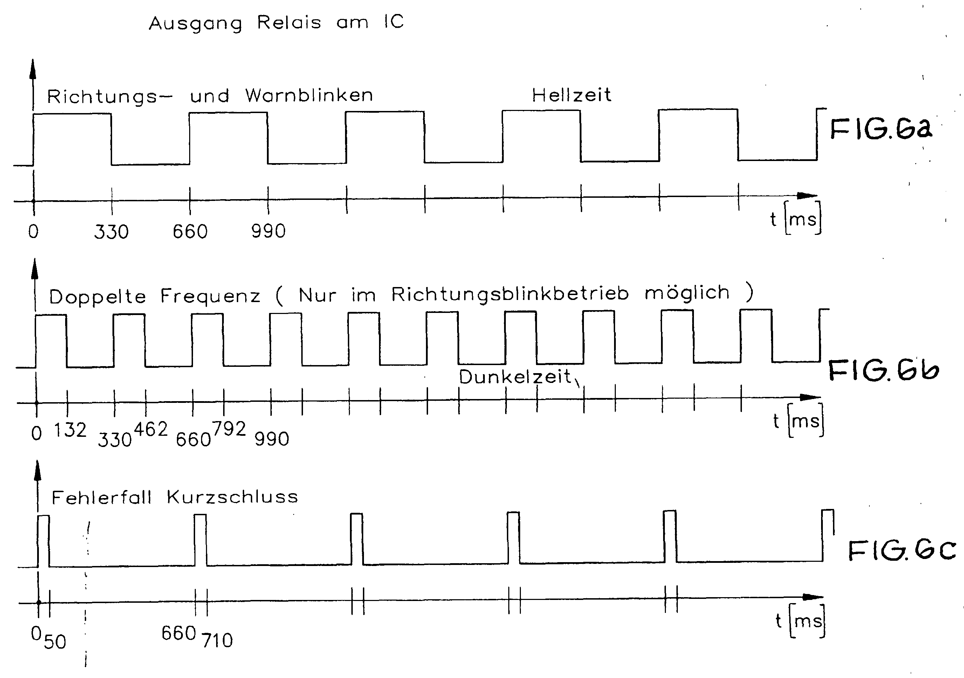

Wird ein Spannungswert gemessen, der beispielsweise unter der Schwelle **V**_{**ref1**} liegt, d. h. wenn die steuereinheit **26** an ihrem Eingang **IN**_{**3**} kein Signal erhält, so liegt ein Ausfall rechts- oder linksseitig einer oder mehrerer Blinklampen **19** vor (Lampen- oder Lastausfall). Um den Blinklampenausfall dem Fahrer anzuzeigen, wird die Blinkfrequenz beim Richtungsblinken auf derjenigen Fahrzeugseite, die vom Lampenausfall betroffen ist, auf 3 Hz verdoppelt. Sind alle Blinklampen **19** der anderen Fahrzeugseite in Ordnung, wird beim Richtungsblinken in diese Richtung mit der regulären Frequenz von 1,5 Hz geblinkt. Die Betriebsart "Lampenausfall" wird später noch detailliert in Verbindung mit den Zeitdiagrammen und Signalverläufen der Fig. 6b und 7b beschrieben.

### Betriebsart "Kurzschluß"

Nach einer bestimmten Zeit von zum Beispiel 50 ms nach Beginn jeder Hellphase beim Richtungs- bzw. Warnblinken wird der spannungswert am Meßwiderstand **R**_{**3**} gemessen und mit der eingestellten Kurzschlußkontrollschwelle verglichen. Liegt im eingeschalteten linken oder rechten Blinkschaltkreis ein Kurzschluß vor, wobei die gemessene Spannung größer ist als die Spannungsschwelle **V**_{**ref4**} am Komparator **K**_{**6**}**,** wird der Relaistreiberausgang **REL** der Steuereinheit **26** deaktiviert, um so die Blinkerrelais **17** und **18** (Fig. 1, 2) ebenfalls zu deaktivieren. Im Kurzschlußfall werden zwar auch die Spannungsschwellen **V**_{**ref1**}**, V**_{**ref2**} und **V**_{**ref3**} überschritten, was aber keine Auswirkungen hat, da bei einem durch den Komparator **K**_{**6**} angezeigten Kurzschluß die Komparatoren **K**_{**3**}**, K**_{**4**} und **K**_{**5**} keine Funktion haben.

Eine Möglichkeit, im Fall eines angezeigten Kurzschlusses den Blinkgeber auf eine Fehlfunktion hin zu überprüfen, besteht darin, zu einem Zeitpunkt die Ausgangssignale der Komparatoren **K**_{**3**}**, K**_{**4**}**, K**_{**5**} und **K**_{**6**} abzufragen. Zeigt das Ausgangssignal des Komparators **K**_{**6**} einen Kurzschluß an und steht an einem Ausgang der Komparatoren **K**_{**3**}**, K**_{**4**} und **K**_{**5**} kein Signal an, dann liegt eine Fehlfunktion des Blinkgebers vor, da beim Überschreiten der Schwelle **V**_{**ref4**} (und damit auch der Schwellen **V**_{**ref1**}**, V**_{**ref2**} und **V**_{**ref3**} **in** diesem Ausführungsbeispiel) nach Tabelle 2 an den Komparatoren **K**_{**3**}**, K**_{**4**} und **K**_{**5**} bei ordnungsgemäßer Funktion jeweils ein High-Pegel anstehen muß.

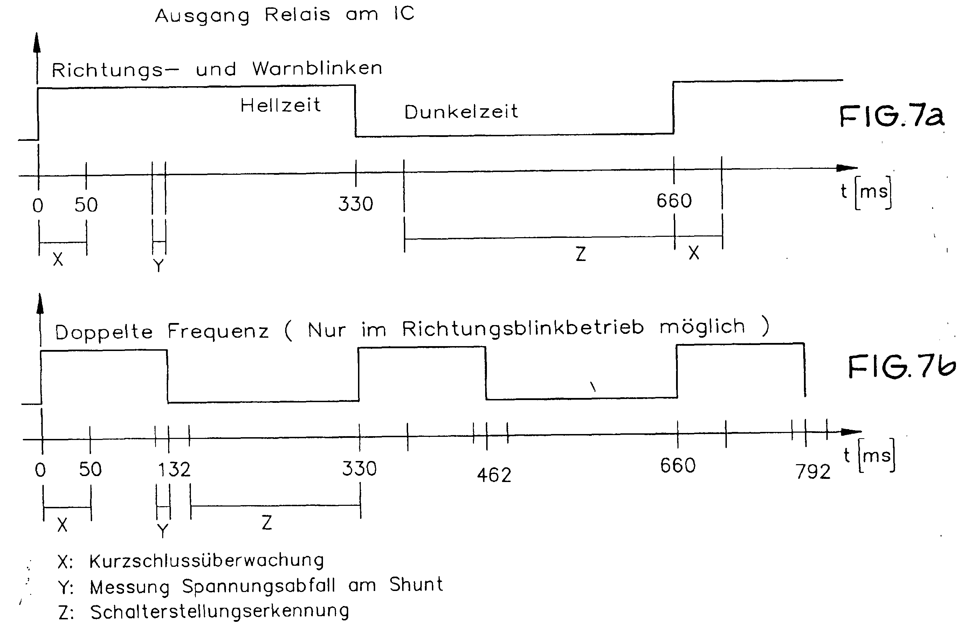

Obwohl im Kurzschlußfall im rechten oder linken Blinkstromkreis der Relaistreiberausgang **REL** deaktiviert wird, wird die interne Zeitzählung fortgesetzt. Nach Ablauf einer Dunkelphase oder Dunkelzeit (Blinklampen sind dunkel) wird wieder eine Hellphase eingeleitet und der Blinkstromkreis auf einen Kurzschluß hin überprüft. Solange anhand eines sehr hohen Lampenstroms ein Kurzschluß detektiert wird, muß (beim Richtungsblinken oder Warnblinken) die Betriebsart "Kurzschluß" beibehalten werden, um die Elektronik vor Zerstörung durch zu hohen Strom zu schützen. Erst dann, wenn kein Kurzschluß mehr vorliegt, wird die Betriebsart "Richtungsblinken" bzw. "Warnblinken" wieder aufgenommen. Die Betriebsart "Kurzschluß" wird später noch in Verbindung mit den Zeitdiagrammen und Signalverläufen der Fig. 6c, 7a und 7b beschrieben.

### Betriebsart "Anhängerbetrieb"

Beim Anschließen der zusätzlichen Blinklampen eines Anhängers an das Fahrzeug wird der Strom im Blinkgeber durch die zusätzlichen Blinklampen größer. Wird beim Richtungsblinken ein Lampenstrom durch den Meßwiderstand **R**_{**3**} detektiert, der größer ist als beispielsweise die Schwelle **V**_{**ref2**}**,** aber kleiner als die Kurzschlußkontrollschwelle **v**_{**ref4**} (in dem Fall, bei dem die Schwelle **V**_{**ref1**} bei der Initialisierung als Lampenausfallkontrollschwelle definiert wurde), d. h. die Steuereinheit **26** erhält am Eingang **IN**_{**4**} ein Signal, nicht aber am Eingang **IN**_{**6**}**,** so erkennt die Steuereinheit **26** daran, daß dem Blinkschaltkreis weitere Verbraucher (Blinklampen) hinzugefügt worden sind, was im allgemeinen auf den Anschluß eines Anhängers mit weiteren Blinklampen **19** zurückzuführen ist. Die Steuereinheit **26** paßt daraufhin die Lastausfallkontrollschwelle dem jetzt fließenden Lampenstrom dadurch an, daß sie jetzt beispielsweise die Spannungsschwelle **V**_{**ref2**} und den Eingang **IN**_{**4**} als Lampenausfallkontrollschwelle definiert (vorausgesetzt, daß bei der Initialisierung **V**_{**ref1**} als Lampenausfallkontrollschwelle definiert wurde).

Dadurch, daß bei mehr als der üblichen Anzahl von Blinklampen am Eingang **IN**_{**4**} kein Signal ansteht, kann beim nächsten Richtungsblinken ein Lampenausfall erkannt werden (das am Eingang **IN**_{**3**} anstehende Signal, d. h. das Überschreiten der Schwelle **V**_{**ref1**}**,** hat keine Bedeutung, da in diesem Fall **V**_{**ref2**} als Lampenausfallkontrollschwelle definiert ist).

Die bei der Initialisierung programmierten Schwellen bleiben auch weiterhin in der Speichereinheit **29** abgelegt, und die Zuweisung einer neuen Lampenausfallkontrollschwelle wird nur in der Steuereinheit **26** vorgenommen. Daher werden nach dem Aus- und späteren Einschalten der Zündung die bei der Initialisierung festgelegten Werte wieder verwendet und beim Richtungsblinken neuerlich überprüft, ob die Blinklampen eines Anhängers am Blinkstromkreis angeschlossen sind.

Die Betriebsart "Anhängerbetrieb" wird also nur solange beibehalten, solange die Zündung eingeschaltet ist. Beim neuerlichen Einschalten der Zündung mittels des Zündschalters **22** (Fig. 1) nach vorangegangenem Ausschalten wird die Betriebsart "Anhängerbetrieb" ausgeschaltet, indem dem Anschluß **RESET1** der Steuereinheit **26** ein Impuls von der Zündung (Anschlußpin **4,** Fig. 3a, 3b) über den Komparator **K**_{**8**} und das OR-Gate **24** zugeführt und dadurch die Steuereinheit **26** zurückgesetzt wird. Die Betriebsart "Anhängerbetrieb" wird wieder aufgenommen, wenn bei eingeschalteter Zündung beim Richtungsblinken nach rechts oder links ein Spannungswert gemessen wird, der in diesem Beispiel größer ist als die schwelle **V**_{**ref2**}**,** da bei der Initialisierung die gemessene Spannung zwischen den Schwellen **V**_{**ref1**} und **V**_{**ref2**} lag.

### Betriebsart "Warnblinken"

Die Betriebsart "Warnblinken" stellt einen Sonderfall dar, weil diese Betriebsart außer im Kurzschlußfall immer verfügbar sein muß, auch bei ausgeschalteter Zündung, Lampenausfall oder Anhängerbetrieb. Wird mittels des Warnblinkschalters **20** (Fig. 1, 2) die Betriebsart "Warnblinken" vor Programmierung der Speichereinheit **29** gewählt, so unterbleibt eine Initialisierung und das Setzen des Programmier-Flags, wie bereits weiter oben beschrieben wurde. Es erfolgt auch keine Überprüfung auf Lampenausfall und damit auch keine Frequenzverdopplung bei Ausfall einer Blinklampe **19** (Fig. 1, 2). Nur im Fall eines festgestellten Kurzschlusses werden die Blinkrelais abgeschaltet, um den Blinkgeber vor Beschädigung oder Zerstörung durch zu hohen Strom zu schützen.

### Zeitdiagramme von Signalverläufen

Die **Fig. 5a-e** zeigen Zeitdiagramme von Signalverläufen an verschiedenen Anschlußpins des Integrierten Schaltkreises **16:**
- Fig. 5a zeigt den Signalverlauf am Relaistreiberausgang **1,**
- Fig. 5b zeigt den Signalverlauf am Warnblinkeingang **6,**
- die Fig. 5c und 5d zeigen den Signalverlauf am Zündungseingang **4** und
- Fig. 5e zeigt den Signalverlauf am Meßeingang **7.**

Die Fig. 5a-e zeigen beispielhafte High- und Low-Spannungspegel für jedes Signal. Die Zeitachse zeigt den standardmäßigen Fall mit einer Blinkfrequenz von 1,5 Hz und sich abwechselnden Hell- und Dunkelphasen. Die Signalverläufe der Fig. 5c und 5d zeigen jeweils, daß die Betriebsart "Warnblinken" bei ein- und bei ausgeschalteter Zündung eingeschaltet werden kann.

Die **Fig. 6a-c** zeigen einen Vergleich der Zeitdiagramme der Spannungsverläufe am Relaistreiberausgang beim Richtungs- und Warnblinken mit einer Blinkfrequenz von 1,5 Hz in Fig. 6a, in der Betriebsart "Lampenausfall" bei einer verdoppelten Blinkfrequenz von 3 Hz in Fig. 6b (wobei die Betriebsart "Lampenausfall" nur in Verbindung mit der Betriebsart "Richtungsblinken" aktiviert werden kann) und beim Auftreten des Fehlerfalles "Kurzschluß", bei dem der Relaistreiberausgang 50 ms beim Vorliegen eines Kurzschlusses nach jedem Beginn einer Hellphase deaktiviert wird.

Die **Fig. 7a** und **7b** stellen jeweils vergrößerte und detaillierte Ausschnitte der Fig. 6a und 6b dar. Es wird gezeigt, daß die Kurzschlußerkennung während einer Zeitspanne X innerhalb 50 ms nach dem Beginn jeder Hellphase vorgenommen wird. Die Verzögerung von 50 ms bei der Kurzschlußüberwachung vermeidet Fehlmessungen aufgrund eines sehr hohen Stromanstiegs bei der Spannungsmessung am Shunt, der zu Beginn jeder Hellphase auftritt (siehe beispielsweise Fig. 4d und 5e).

Diese Zeitdiagramme zeigen auch, daß der Timingablauf ca. 20 ms nach dem Schließen des Richtungs- oder Blinkschalters beginnt, um Prellvorgänge zu vermeiden.

Wird während der Zeitspanne X ein Kurzschluß erkannt, wird die Betriebsart "Kurzschluß" gemäß Fig. 6c aufgenommen, um den Blinkgeber vor zu hohem Strom zu schützen. Wird kein Kurzschluß erkannt, wird gemäß Fig. 7a die normale Betriebsart beibehalten und der Spannungsabfall am Shunt **R**_{**3**} zum Zeitpunkt Y gemessen, beispielsweise nach ca. 130 ms. Wenn die gemessene Spannung im normalen Bereich liegt, d. h. nicht unterhalb der Lampenausfallkontrollschwelle, wird die Betriebsart gemäß Fig. 7a beibehalten. Liegt andererseits die Spannung unterhalb der zuvor festgelegten Lampenausfallkontrollschwelle, wird die Betriebsart "Lampenausfall" aufgenommen. schließlich wird während der Zeitspanne Z die Schalterstellung des Richtungsblinkschalters und des Warnblinkschalters abgefragt um zu entscheiden, ob der Blinkvorgang fortzusetzen ist.

### Betriebsablauf

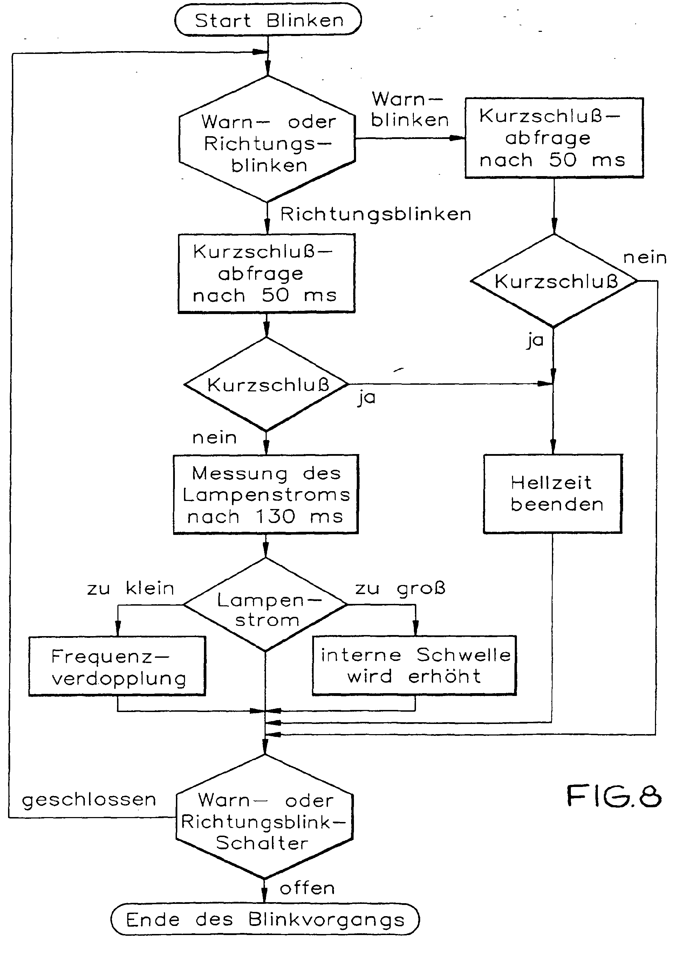

Das Flußdiagramm der **Fig. 8** veranschaulicht den dem erfindungsgemäßen verfahren zugrunde liegenden Algorithmus. Bei eingeschalteter Zündung wird je nach Schließen des Richtungs- bzw. des Warnblinkschalters in die Betriebsart "Richtungsblinken" bzw. "Warnblinken" verzweigt und eine erste Hellphase eingeleitet (wobei die Betriebsart "Warnblinken", wie bereits beschrieben, auch bei ausgeschalteter Zündung verfügbar ist). 50 ms nach Beginn einer Hellphase erfolgt sowohl in der Betriebsart "Richtungsblinken" als auch in der Betriebsart "Warnblinken" eine Kurzschlußabfrage, wozu der am Meßwiderstand **R**_{**3**} (Fig. 1, 2) auftretende Spannungswert gemessen und mit der am Komparator **K**_{**6**} (Fig. 3a) eingestellten Kurzschlußkontrolischwelle verglichen wird. Liegt ein Kurzschluß vor, wird in beiden Betriebsarten sofort die Hellphase beendet, um die Elektronik vor zu hohem Strom zu schützen und zur Abfrage von Warn- und Richtungsblinkschalter verzweigt.

Liegt kein Kurzschluß vor, erfolgt in der Betriebsart "Warnblinken" ebenfalls eine Verzweigung zur Abfrage von Warn- und Richtungsblinkschalter. ln der Betriebsart "Richtungsblinken" hingegen wird zuerst ca. 130 ms nach Beginn jeder Hellphase eine weitere Messung des Lampenstroms vorgenommen (während in der Betriebsart "Warnblinken" keine weitere Messung erfolgt) und erst danach die Schalterstellung von Richtungsblinkschalter und Warnblinkschalter abgefragt. Ergibt die Messung, daß der Lampenstrom (d. h. der durch alle Blinklampen fließende Gesamtstrom, der auch durch den Meßwiderstand **R**_{**3**} fließt) kleiner ist als die eingestellte Lastausfallkontrollschwelle, so wird die Betriebsart "Lampenausfall" aufgenommen und die Blinkfrequenz verdoppelt, um den Lampenausfall anzuzeigen.

Ergibt die Messung, daß der Lampenstrom eine höhere Spannungsschwelle als die eingestellte Lastausfallkontrollschwelle, jedoch nicht die Lampenausfallkontrollschwelle überschreitet, weil beispielsweise die Blinklampen eines Anhängers angeschlossen worden sind, so wird als neue Lastausfallkontrollschwelle eine neue Spannungsschwelle gewählt, die über dem Spannungsmeßwert am Meßwiderstand **R**_{**3**}**,** jedoch unterhalb der Kurzschlußkontrollschwelle liegt.

Nach Erhöhung der Lastausfallkontrollschwelle, nach Frequenzverdopplung aufgrund einer oder mehrerer ausgefallener Blinklampen, oder wenn die am Shunt **R**_{**3**} gemessene Spannung die gesetzte Lastausfallkontrollschwelle, aber nicht die nächst höhere Schwelle überschreitet (d. h. die Spannung liegt im normalen Bereich), wird die Stellung von Warn- und Richtungsblinkschalter abgefragt. Ist einer der beiden Schalter geschlossen, wird der jeweilige Blinkvorgang fortgesetzt, indem zum Beginn des Algorithmus verzweigt wird. Sind beide Schalter offen, wird der Blinkvorgang beendet.

Das erfindungsgemäße Verfahren und die erfindungsgemäße elektronische Schaltung eignen sich insbesondere zum Einsatz in einem elektronischen Blinkgeber, der universell und selbstanpassend zur Steuerung, Überprüfung und Betätigung einer Vielzahl von Blinklampenkonfigurationen in Fahrzeugen einsetzbar ist.

In Abwandlung des Vorstehend erlanterten speziellen Ausführungsbeispiels kann eine Schaltungsanordnung gemäß der Erfindung weiterhin mehr oder weniger als vier zur Spannungsmessung an den Meßeingang 7 angeschlossene Komparatoren enthalten, um mehr oder weniger Spannungsschwellen zu erhalten. In jedem Fall wird die höchste Schwelle als Kurzschlußkontrollschwelle definiert, und die verbleibenden Schwellen stehen als Lastausfallkontrollschwellen für bestimmte Betriebszustände zur Verfügung.

## Patentansprüche

1. Verfahren zur Überwachung eines aus mehreren parallel geschalteten Lastelementen (19) gebildeten, im intermittierenden Betrieb geführten Laststromkreis, bei dem der gesamte Laststrom über einen Meßwiderstand (R₃) geführt und bei dem der an diesem Meßwiderstand (R₃) auftretende Spannungswert gemessen und ausgewertet wird, mit den weiteren **Verfahrensschritten:**
a) als Last- oder Lampenausfallkontrollschwelle wird eine erste Spannungsschwelle (V_{ref1}) festgelegt,
b) als KurzschluBkontrollschwelle wird eine zweite Spannungsschwelle (V_{ref4}) festgelegt, die größer ist als die erste Spannungsschwelle(V_{ref1}), und
c) der während des Betriebes erzeugte Spannungswert wird mit der Lastausfallkontrollschwelle und der Kurzschlußkontrollschwelle verglichen, und in Abhängigkeit des Vergleichsergebnisses wird ein Lastausfall oder ein KurzschluB detektiert, oder eine höhere Spannungsschwelle (V_{ref2}, V_{ref3}) als die erste Spannungsschwelle (V_{ref1}) wird als Lampenausfallkontrollschwelle festgelegt, falls die Kurzschlußkontrollschwelle (V_{ref4})noch nicht überschritten ist.

2. Verfahren nach Anspruch 1, **dadurch gekennzeichnet, daß** den Spannungsschwellen (V_{ref1}, V_{ref2}, V_{ref3}, V_{ref4}) weitere Spannungsschwellen hinzugefügt werden.

3. Verfahren nach Anspruch 1 oder 2, **dadurch gekennzeichnet, daß** bei einer Detektion eines Kurzschlusses nach einer bestimmten Zeit von beispielsweise 50 ms der Laststrom abgeschaltet wird.

4. Verfahren nach Anspruch 3, **dadurch gekennzeichnet, daß** bei einer Detektion eines Kurzschlusses nach Ablauf einer weiteren bestimmten Zeitdauer erneut der Laststrom eingeschaltet wird.

5. Verwendung des Verfahrens nach einem der vorangehenden Ansprüche zur Überwachung eines Blinkgeberlaststromkreises für Kraftfahrzeuge mit Blinklampen als Lastelemente (19).

6. Elektronische Schaltung zur Durchführung des Verfahrens nach einem der Ansprüche 1 bis 5, mit
a) einem Meßwiderstand (Shunt, R₃),
b) wenigstens einem steuerbaren Schaltelement (17, 18) zur Steuerung des Laststromkreises,
c) mehreren parallel geschalteten Lastelementen (19), insbesondere Blinklampen, und
d) einem integrierten Schaltkreis (16) mit
- wenigstens zwei Komparatoren (K₃, K₄) zur Bildung der ersten und tweiten Spannungsswellen (V_{ref1}, V_{ref2})
- wird einer internen steuereinheit (26) zum Festlegen der ersten und tweiten Spannungsschwellen (V_{ref1}, V_{ref2}) und zur Steuerung des Schaltelements (17, 18) und
- wird einer Speichereinheit (29) zur Speicherung der ersten Spannungsschwelle (V_{ref1}).

7. Elektronische Schaltung nach Anspruch 6, **dadurch gekennzeichnet, daß** weitere Komparatoren (K₅, K₆) zur Bildung weiterer Spannungsschwellen (V_{ref3}, V_{ref4}) vorgesehen sind.

8. Elektronische Schaltung zur Durchführung des Verfahrens nach einem der Ansprüche 1 bis 5, mit
a) einem Messwiderstand (Shunt, R₃),
b) wenigstens einem steuerbaren Schaltelement (17, 18) zur Steuerung des Laststromkreises,
c) mehreren parallel geschalteten Lastelementen (19), insbesondere Blinklampen, und
d) einem integrierten Schaltkreis (16) mit
- einem Analog-Digital-Umsetzer zur Bildung der ersten und zweiten Spannungsschwellen (V_{ref1}, V_{ref2}),
- einer internen Steuereinheit (26) zum Festlegen der ersten und zweiten Spannungsschwellen (V_{ref1}, V_{ref2}) und zur Steuerung des Schaltelements (17, 18) und
- einer Speichereinheit (29) zur Speicherung der ersten Spannungsschwelle (V_{ref1}).

9. Elektronische Schaltung nach Anspruch 8, **dadurch gekennzeichnet, dass** der Analog-Digital-Umsetzer zur Bildung weiterer Spannungsschwellen (V_{ref3}, V_{ref4}) ausgebildet ist.

10. Elektronische Schaltung nach einem der Ansprüche 6 bis 9,**dadurch gekennzeichnet, daß** die Speichereinheit (29) über einen Permanentspeicher verfügt.

11. Elektronische Schaltung nach einem der Ansprüche 6 bis 10, **dadurch gekennzeichnet, daß** es sich bei den Schaltelementen (17, 18) um Blinkrelais handelt.

12. Elektronische Schaltung nach einem der Ansprüche 6 bis 11, **dadurch gekennzeichnet, daß** es sich bei den Schaltelementen (17, 18) um Power-MOSFETS handelt.

13. Verwendung der elektronischen Schaltung nach einem der Ansprüche 6 bis 12 als elektronischer Blinkgeber für Kraftfahrzeuge.

## Claims

1. Method of monitoring a load circuit, which is formed from several load elements (19) connected in parallel and which is driven in intermittent operation, the entire load current being conducted by way of a measuring resistor (R₃) and the voltage value arising at this measuring resistor (R₃) being measured and evaluated, with the further method steps:
a) a first voltage threshold (V_{ref1}) is established as load or lamp failure control threshold,
b) a second voltage threshold (V_{ref4}), which is greater than the first voltage threshold (V_{ref1}), is established as short-circuit control threshold and
c) the voltage value produced during operation is compared with the load failure control threshold and the short-circuit control threshold and depending on the comparison result a load failure or a short-circuit is detected or a voltage threshold (V_{ref2}, V_{ref3}) higher than the first voltage threshold (V_{ref1}) is established as lamp failure control threshold if the short-circuit control threshold (V_{ref4} is still not exceeded.

2. Method according to claim 1, **characterised in that** further voltage thresholds are added to the voltage thresholds (V_{ref1}, V_{ref2}, V_{ref3}, V_{ref4}).

3. Method according to claim 1 or 2, **characterised in that** in the case of detection of a short-circuit the load current is switched off after a specific time of, for example, 50 ms.

4. Method according to claim 3, **characterised in that** in the case of detection of a short-circuit the load current is switched back on again after expiry of a further specific time period.

5. Use of the method according to one of the preceding claims for monitoring a flasher unit load circuit for motor vehicles with indicator lamps as load elements (19).

6. Electronic circuit for carrying out the method according to one of claims 1 to 5, comprising
a) a measuring resistor (shunt, R₃),
b) at least one controllable switching element (17, 18) for controlling the load circuit,
c) several load elements (19), particularly indicator lamps, connected in parallel, and
d) an integrated circuit (16) with
- at least two comparators (K₃, K₄) for forming the first and second voltage thresholds (V_{ref1}, V_{Ref2}).
- an internal control unit (26) for fixing the first and second voltage thresholds (V_{ref1}, V_{ref2}) and for controlling the switching element (17, 18) and
- a storage unit (29) for storage of the first voltage threshold (V_{ref1}).

7. Electronic circuit according to claim 6, **characterised in that** further comparators (K₅, K₆) for formation of further voltage thresholds (V_{ref3}, V_{ref4}) are provided.

8. Electronic circuit for carrying out the method according to one of claims 1 to 5, comprising
a) a measuring resistor (shunt, R₃).
b) at least one controllable switching element (17, 18) for controlling the load circuit,
c) several load elements (19), particularly indicator lamps, connected in parallel, and
d) an integrated circuit (16) with
- an analog-to-digital converter for forming the first and second voltage thresholds (V_{ref1}, V_{Ref2}),
- an internal control unit (26) for fixing the first and second voltage thresholds (V_{ref1}, V_{ref2}) and for controlling the switching element (17, 18) and
- a storage unit (29) for storage of the first voltage threshold (V_{ref1}).

9. Electronic circuit according to claim 8, **characterised in that** the analog-to-digital converter is constructed for formation of further voltage thresholds (V_{ref3}, V_{ref4}).

10. Electronic circuit according to one of claims 6 to 9, **characterised in that** the storage unit (29) has a permanent store.

11. Electronic circuit according to one of claims 6 to 10, **characterised in that** the switching elements (17, 18) consist of a flasher relay.

12. Electronic circuit according to one of claims 6 to 11, **characterised in that** the switching elements (17, 18) are power MOSFETs.

13. Use of the electronic circuit according to one of claims 6 to 12 as an electronic flasher for motor vehicles.

## Revendications

1. Procédé de surveillance d'un circuit de courant de charge en fonctionnement intermittent constitué de plusieurs éléments de charge (19) montés en parallèle, dans lequel la totalité du courant de charge traverse une résistance de mesure (R₃) et dans lequel la valeur de tension apparaissant sur cette résistance de mesure (R₃) est mesurée et exploitée, procédé comprenant les étapes de procédure suivantes :
a) ont détermine un premier seuil de tension (V_{ref1}) comme seuil de contrôle de défaillance de charge ou de défaillance de lampe,
b) on détermine un deuxième seuil de tension (**V**_{**ref4**}) comme seuil de contrôle de court-circuit, plus élevé que le premier seuil de tension (V_{ref1}), et
c) on compare la valeur de tension générée durant le fonctionnement au seuil de contrôle de défaillance de charge et au seuil de contrôle de court-circuit, et on détecte, en fonction du résultat de la comparaison, une défaillance de charge ou un court-circuit, ou on détermine un seuil de tension (V_{ref2}, V_{ref3}) plus élevé que le premier seuil de tension ( V_{ref1}) comme seuil de contrôle de défaillance de lampe, au cas où le seuil de contrôle de court-circuit (V_{ref4}) n'est pas encore dépassé.

2. Procédé selon la revendication 1, **caractérisé en ce que** l'on ajoute d'autres seuils de tension aux seuils de tension (V_{ref1}, V_{ref2}, V_{ref3}, V_{ref4}).

3. Procédé selon la revendication 1 ou 2, **caractérisé en ce qu'**en cas de détection d'un court-circuit, le courant de charge est coupé après une durée déterminée de 50 ms par exemple.

4. Procédé selon la revendication 3, **caractérisé en ce qu'**en cas de détection d'un court-circuit, le courant de charge est à nouveau rétabli après une autre durée déterminée.

5. Utilisation du procédé selon l'une quelconque des revendications précédentes pour la surveillance d'un circuit de courant de charge d'un clignotant pour véhicules à moteur ayant des clignotants comme éléments de charge (19).

6. Circuit électronique pour réaliser le procédé selon l'une quelconque des revendications 1 à 5, comprenant :
a) une résistance de mesure, (Shunt, R₃),
b) au moins un élément de circuit (17,18) de commande pour commander le circuit de courant de charge,
c) plusieurs éléments de charge (19) montés en parallèle, en particulier des lampes clignotantes, et
d) un circuit intégré (16) comprenant
- au moins deux comparateurs (K₃, K₄) pour constituer les premier et deuxième seuils de tension (v_{ref1}, V_{ref2}),
- une unité de commande (26) interne pour déterminer les premier et deuxième seuils de tension (V_{ref1}, V_{ref2}) et pour commander les éléments de circuit (17, 18) et
- une unité mémoire (29) pour stocker le premier seuil de tension (V_{ref1}).

7. Circuit électronique selon la revendication 6, **caractérisé en ce que** d'autres comparateurs (K₅, K₆) sont prévus pour constituer d'autres seuils de tension (V_{ref3}, V_{ref4}).

8. Circuit électronique pour réaliser le procédé selon l'une quelconque des revendications 1 à 5, comprenant :
a) une résistance de mesure (Shunt, R₃),
b) au moins un élément de circuit (17,18) à commande pour commander le circuit de courant de charge,
c) plusieurs éléments de charge (19) montés en parallèle, en particulier des lampes clignotantes, et
d) un circuit intégré (16) comprenant :
- un convertisseur analogique-numérique pour constituer les premier et deuxième seuils de tension (V_{ref1}, V_{ref2}),
- une unité de commande (26) interne pour déterminer les premier et deuxième seuils de tension (V_{ref1}, V_{ref2}) et pour commander les éléments de circuit (17, 18) et
- une unité mémoire (29) pour stocker le premier seuil de tension (V_{ref1}).

9. Circuit électronique selon la revendication 8, **caractérisé en ce que** le convertisseur analogique-numérique est conçu pour constituer d'autres seuils de tension (V_{ref3}, V_{ref4}).

10. Circuit électronique selon l'une quelconque des revendications 6 à 9, **caractérisé en ce que** l'unité mémoire (29) dispose d'une mémoire permanente.

11. Circuit électronique selon l'une quelconque des revendications 6 à 10, **caractérisé en ce que** dans le cas des éléments de circuit (17, 18) il s'agit de relais de clignoteurs.

12. Circuit électronique selon l'une quelconque des revendications 6 à 11, **caractérisé en ce que** les éléments de circuit (17, 18) sont des transistors de puissance à effet de champ MOS.

13. Utilisation du circuit électronique selon l'une quelconque des revendications 6 à 12 comme clignotant pour véhicules automobiles.
